# EUROPÄISCHE PATENTSCHRIFT

(11) **EP 1 131 980 B1**
(45) Veröffentlichungstag und Bekanntmachung des Hinweises auf die Patenterteilung: **21.07.2004**
(21) Anmeldenummer: 99960878.9
(22) Anmeldetag: 09.11.1999
(51) Int. Cl.: H04Q 11/04

(54) **VERFAHREN UND SCHALTUNGSANORDNUNG ZUR GLEICHZEITIGEN HERSTELLUNG VON KOMMUNIKATIONSVERBINDUNGEN**
METHOD AND CIRCUIT FOR SIMULTANEOUSLY PRODUCING COMMUNICATIONS LINKS
PROCEDE ET CIRCUIT POUR ETABLIR SIMULTANEMENT DES LIAISONS DE COMMUNICATION

(30) Priorität: 16.11.1998 DE 19852789
(43) Veröffentlichungstag der Anmeldung: 12.09.2001
(73) Patentinhaber: SIEMENS AKTIENGESELLSCHAFT, 80333 München (DE)
(72) Erfinder: MEYER, Gerald, D-82178 Puchheim (DE); SCHINK, Helmut, D-81927 München (DE)
(86) Internationale Anmeldenummer: PCT/DE1999/003573
(87) Internationale Veröffentlichungsnummer: WO 2000/030400

(56) Entgegenhaltungen:
- DE-A- 4 423 792
- US-A- 4 397 030
- US-A- 4 658 397

## Beschreibung

Die Erfindung bezieht sich auf ein Verfahren und eine Schaltungsanordnung zur gleichzeitigen Herstellung einer Mehrzahl von Kommunikationsverbindungen zwischen einer über eine einzige Teilnehmeranschlußleitung an einer Vermittlungsstelle eines Kommunikationsnetzes angeschlossenen Teilnehmerstelle und weiteren an demselben Kommunikationsnetz angeschlossenen Teilnehmerstellen.

In derzeit existierenden Kommunikationsnetzen sind die Telekommunikationsanschlüsse im Falle von analogen Anschlüssen lediglich für die Herstellung einer einzigen Verbindung und im Falle von digitalen Kommunikationsanschlüssen, insbesondere von ISDN-Anschlüssen in der Regel für zwei gleichzeitig herstellbare Kommunikationsverbindungen ausgelegt. In ISDN-Kommunikationsnetzen besteht zwar generell die Möglichkeit, einer Teilnehmerstelle eine ganze Reihe von Übertragungskanälen für die gleichzeitige Herstellung einer entsprechenden Anzahl von Verbindungen zuzuteilen. Es ist allerdings zu berücksichtigen, daß diese Vorgehensweise nicht flächendeckend verfügbar und von der vermittlungstechnischen Seite her betrachtet zum Teil auch überhaupt nicht möglich ist.

Die Druckschnift DE-A-4 423 792 offenbart ein Verfahren zur Mehrfachausnutzung von Basiskanälen im ISDN, bei dem in einem Nutzkanal mehrere daten reduzierte Sprachkanäle übertragen werden können.

Der Erfindung liegt demgemäß die Aufgabe zugrunde, einen Weg zu zeigen, wie eine Mehrzahl von gleichzeitigen Kommunikationsverbindungen zwischen einer über eine einzige Teilnehmeranschlußleitung an einer Vermittlungsstelle eines Kommunikationsnetzes angeschlossenen Teilnehmerstelle und weiteren an demselben Kommunikationsnetz angeschlossenen Teilnehmerstellen möglich ist.

Gelöst wird die vorstehend aufgezeigte Aufgabe bei einem Verfahren der eingangs genannten Art erfindungsgemäß dadurch, daß die genannte Teilnehmeranschlußleitung zwischen ihrer Teilnehmerstelle und der zugehörigen Vermittlungsstelle des betreffenden einen Kommunikationsnetzes als Multiplex-Anschlußleitung betrieben wird, über die eine Mehrzahl von Kommunikationsverbindungen mit einer entsprechenden Anzahl von zu der Teilnehmerstelle gehörenden Kommunikationsendgeräten aufbaubar ist,
daß zwischen der betreffenden Vermittlungsstelle und einer Umsetzeinrichtung zumindest eine Verbindungsleitung als Multiplex-Verbindungsleitung betrieben wird
und daß in der genannten Umsetzeinrichtung zum einen von der genannten einen Teilnehmerstelle über die betreffende eine Vermittlungsstelle im Multiplexbetrieb übertragene Nachrichtensignale für verschiedene Kommunikationsverbindungen im Zuge von Einzelverbindungen zu der genannten Vermittlungsstelle wieder zurückgeleitet werden, von der dann Einzelverbindungen zu gewünschten anzurufenden Teilnehmerstellen aufgebaut werden, und zum anderen im Zuge von Einzelverbindungen für die Kommunikationsendgeräte der genannten einen Teilnehmerstelle bestimmte Nachrichtensignale aufgenommen und dann im Zuge einer Multiplexverbindung wieder über die betreffende Vermittlungsstelle zu den einzelnen Kommunikationsendgeräten der genannten einen Teilnehmerstelle geleitet werden.

Die Erfindung bringt den Vorteil mit sich, daß ohne irgendwelche Eingriffe in die Vermittlungseinrichtung, an der die genannte eine Teilnehmerstelle angeschlossen ist, zwischen dieser Teilnehmerstelle und einer Mehrzahl von weiteren am selben Kommunikationsnetz angeschlossenen Teilnehmerstellen gleichzeitig eine Mehrzahl von Kommunikationsverbindungen hergestellt werden kann. Damit eignet sich das Verfahren gemäß der Erfindung ganz besonders gut zur nachträglichen Steigerung der Anzahl von gleichzeitig herstellbaren Kommunikationsverbindungen zwischen einer über eine einzige Teilnehmeranschlußleitung an einer Vermittlungsstelle eines Kommunikationsnetzes angeschlossenen Teilnehmerstelle und weiteren an demselben Kommunikationsnetz angeschlossenen Teilnehmerstellen.

Zweckmäßigerweise wird die genannte Multiplexverbindung als Zeitmultiplexverbindung betrieben. Dies bringt den Vorteil einer besonders einfach realisierbaren Multiplexverbindung mit sich.

Von Vorteil ist es, wenn bei Nutzung einer digital betriebenen Teilnehmeranschlußleitung mit wenigstens einem von der betreffenden Teilnehmerstelle nutzbaren Kommunikationskanal dieser im Zuge der Zeitmultiplexverbindung in mehrere Unterkanäle aufgeteilt wird.

Von ganz besonderem Vorteil ist es dabei, die in den einzelnen Unterkanälen zu übertragenden Sprachsignale komprimiert zu übertragen. Dadurch wird im Falle der Übertragung von Sprachsignalen praktisch kaum eine Sprachqualitätsverminderung sichergestellt.

Zweckmäßigerweise werden in dem Fall, daß eine Umsetzeinrichtung in einer Übergangseinrichtung zu einem weiteren Kommunikationsnetz, insbesondere einem Datennetz, vorzugsweise dem Internet, eingesetzt wird, Nachrichtensignale und Signalisierungszeichen von/zu den einzelnen Endgeräten der genannten einen Teilnehmerstelle in Form von Datensignalpaketen in dem genannten Datennetz übertragen. In dem Fall, daß das betreffende Datennetz durch das Internet gebildet ist, kommen somit in vorteilhafter Weise bei der genannten einen Teilnehmerstelle die im Internet praktizierten Übertragungstechniken zum Tragen. Im Falle von Sprachverbindungen wird in diesem Zusammenhang im englischen Sprachraum auch von "Voice over IP (Internet-Protokoll)" gesprochen.

Zur Durchführung des Verfahrens gemäß der Erfindung ist es zweckmäßig, eine Schaltungsanordnung zu verwenden mit wenigstens einer eine Mehrzahl von Kommunikationsendgeräten aufweisenden Teilnehmerstelle, die über eine einzige Teilnehmeranschlußleitung an einer Vermittlungsstelle, insbesondere einer digitalen Vermittlungsstelle eines Kommunikationsnetzes angeschlossen ist.

Diese Schaltungsanordnung ist gemäß der Erfindung dadurch gekennzeichnet, daß die an der wenigstens einen Teilnehmerstelle in einer Mehrzahl vorgesehenen Kommunikationsendgeräte über einen Multiplexer/Demultiplexer am teilnehmerseitigen Ende der Teilnehmeranschlußleitung der betreffenden Teilnehmerstelle angeschlossen sind,
daß an der genannten Vermittlungsstelle über mindestens eine Verbindungsleitung eine Umsetzeinrichtung mit einem Demultiplexer/Multiplexer angeschlossen ist, zwischen dem und dem genannten Multiplexer/Demultiplexer Multiplexverbindungen über die genannte Vermittlungsstelle und die Teilnehmeranschlußleitung von bzw. zu den Kommunikationsendgeräten der genannten einen Teilnehmerstelle aufbaubar sind,
und daß die betreffende Umsetzeinrichtung mit der genannten Vermittlungsstelle außerdem über eine Mehrzahl von Einzelverbindungsleitungen verbunden ist, über die zum einen über die genannte Verbindungsleitung im Zuge einer Multiplexverbindung zugeführte Nachrichtensignale im Zuge von Einzelverbindungen zu der Vermittlungsstelle zurückleitbar sind in der bzw. über die die betreffenden Nachrichtensignale an in Frage kommende anzurufende Teilnehmerstellen weiterleitbar sind, und über die zum anderen im Zuge von Einzelverbindungen zu Kommunikationsendgeräten der genannten einen Teilnehmerstelle hin Nachrichtensignale zu der genannten Umsetzeinrichtung hin leitbar sind, durch deren Demultiplexer/Multiplexer diese Nachrichtensignale im Rahmen einer Multiplexverbindung über die genannte eine Verbindungsleitung zu der betreffenden einen Vermittlungsstelle und über diese zu den in Frage kommenden Kommunikationsendgeräten der betreffenden Teilnehmerstelle hin übertragbar sind.

Durch die vorstehend aufgezeigten schaltungstechnischen Maßnahmen ergibt sich der Vorteil eines insgesamt relativ geringen schaltungstechnischen Aufwands im Zuge der Durchführung des Verfahrens gemäß der Erfindung. In der Vermittlungsstelle, an der die genannte eine Teilnehmerstelle über ihre Teilnehmeranschlußleitung angeschlossen ist, werden überhaupt keine schaltungstechnischen Veränderungen vorgenommen. Lediglich auf der Seite der betreffenden Teilnehmerstelle und in der genannten Umsetzeinrichtung sind entsprechende Schaltungsmaßnahmen getroffen.

Zweckmäßigerweise ist die Umsetzeinrichtung in einer Übergangseinrichtung zu einem weiteren Kommunikationsnetz, insbesondere dem Internet, enthalten, wobei zwischen der betreffenden Übergangseinrichtung und der genannten Teilnehmerstelle Kommunikationsverbindungen aufbaubar sind, die zu bzw. von an dem genannten weiteren Kommunikationsnetz, an der genannten einen Vermittlungsstelle oder an einer weiteren Vermittlungsstelle des genannten einen Kommunikationsnetzes angeschlossenen weiteren Teilnehmerstellen weiterführbar bzw. aufbaubar sind. Dies bringt den Vorteil einer ganz besonders einfachen Realisierbarkeit der Schaltungsanordnung gemäß der Erfindung mit sich.

Vorzugsweise ist in dem Fall, daß das genannte weitere Kommunikationsnetz ein Datennetz, insbesondere das Internet ist zwischen dem Multiplexer/Demultiplexer und der Teilnehmeranschlußleitung eine Umsetzschaltung vorgesehen, in der von der betreffenden Teilnehmerstelle abgegebene Nachrichtensignale und Signalisierungszeichen zu Datensignalpaketen umgesetzt werden, die in dem genannten Datennetz verarbeitbar sind, und in der von dem Datennetz her zugeführte Datensignalpakete in Nachrichtensignale und Signalisierungszeichen für die Abgabe an die in Frage kommenden Kommunikationsendgeräte der genannten Teilnehmerstelle umgesetzt werden. Hierdurch ergibt sich der Vorteil eines relativ geringen schaltungstechnischen Aufwands, um die von/zu der genannten einen Teilnehmerstelle zu übertragenden Signale in dem genannten Datennetz effektiv übertragen zu können. Handelt es sich bei dem betreffenden Datennetz um das Internet, so können die für die Übertragung der verschiedenen Signale im Internet anzuwendenden Übertragungsprotokolle in der vorstehend genannten Umsetzschaltung ohne weiteres berücksichtigt werden.

Von Vorteil ist es ferner, wenn der genannten Multiplexer/Demultiplexer mit der Vermittlungseinrichtung, an der die genannte eine Teilnehmerstelle angeschlossen ist, über eine gesonderte Signalisierungs-Steuerschaltung verbunden ist, über die der jeweilige Verbindungsaufbau von der betreffenden Teilnehmerstelle über die genannte Vermittlungseinrichtung zu der damit verbundenen Umsetzeinrichtung steuerbar ist. Hierdurch läßt sich auf besonders einfache Weise der jeweilige Verbindungsaufbau von der genannten Teilnehmerstelle aus zu der genannten Umsetzeinrichtung steuern.

Anhand einer Zeichnung wird die Erfindung nachstehend an einem Ausführungsbeispiel näher erläutert.

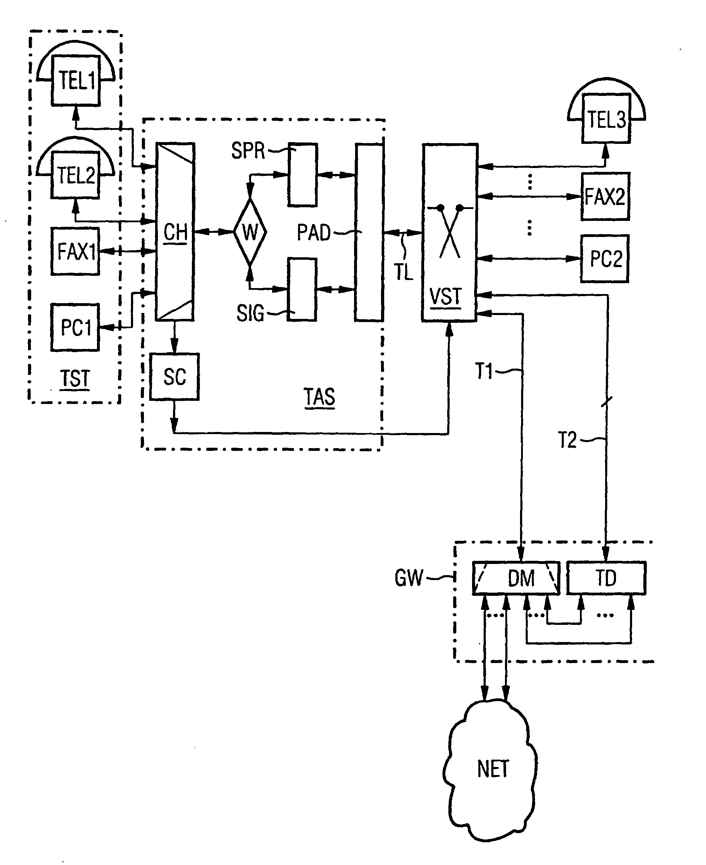

In der Zeichnung ist eine Teilnehmerstelle bzw. Teilnehmerstation TST dargestellt, die im vorliegenden Fall vier Kommunikationsendgeräte umfaßt, nämlich ein Fernsprechendgerät TEL1, ein weiteres Fernsprechendgerät TEL2, ein Faxgerät FAX1 und einen Heim- bzw. Personalcomputer PC1, und die über eine bidirektional betriebene Teilnehmeranschlußschaltung TAS und eine mit dieser verbundene Teilnehmeranschlußleitung TL an einer Vermittlungsstelle VST eines Kommunikationsnetzes angeschlossen ist, der die betreffende Teilnehmerstelle TST zugehörig ist. Die betreffende Vermittlungsstelle VST ist hier über eine Übergangseinrichtung, ein sogenanntes Gateway, mit einem weiteren Kommunikationsnetz verbunden, welches hier durch ein Datennetz NET gegeben ist, das insbesondere durch das Internet gebildet sein kann.

Die zuvor genannten vier Kommunikationsendgeräte TEL1, TEL2, FAX1 und PC1 sind mit Ein-/Ausgängen einer Kanalbildungseinrichtung bzw. eines Multiplexers/Demultiplexers CH verbunden. Der betreffende Multiplexer/Demultiplexer CH ist mit seiner Multiplexausgangs-/Multiplexeingangsseite über eine in der Teilnehmeranschlußschaltung TAS enthaltene Umsetzschaltung - auf die nachstehend noch näher eingegangen wird - mit der Teilnehmeranschlußleitung TL verbunden, über die die Teilnehmerstelle TST an der Vermittlungsstelle VST angeschlossen ist, der die betreffende Teilnehmerstelle TST zugehörig ist.

Die vorstehend erwähnte Umsetzschaltung umfaßt im vorliegenden Fall von der Seite der Teilnehmerstelle TST aus bzw. von der Seite des Multiplexers/Demultiplexers CH aus betrachtet - eine bidirektional arbeitende Weichenschaltung W, in der die von den einzelnen Kommunikationsendgeräten abgegebenen Nachrichtensignale und Signalisierungszeichen zum einen getrennt zu einem ebenfalls bidirektional arbeitenden Nachrichtensignalumsetzer SPR und zu einem ebenfalls bidirektional arbeitenden Signalisierungsumsetzer SIG weitergeleitet werden. In diesen Umsetzern werden die von den Kommunikationsendgeräten abgegebenen Nachrichtensignale und Signalisierungszeichen in Datensignale umgesetzt, welche den Vorschriften bzw. Übertragungsprotokollen genügen, die in dem genannten Datennetz NET gelten, über das die betreffenden Signale zu leiten sind. An dieser Stelle sei noch angemerkt, daß in dem Nachrichtensignalumsetzer SPR beispielsweise als Nachrichtensignale zugeführte analoge Sprachsignale in digitale Datensignale umgesetzt werden. In dem Signalisierungsumsetzer SIG werden die von den Kommunikationsendgeräten abgegebenen Signalisierungszeichen beispielsweise entsprechend den Vorschriften, wie sie z.B. in der ITU-Empfehlung H.323 niedergelegt sind, umgesetzt.

Den vorstehend betrachteten Umsetzern SPR und SIG ist zur Seite der Teilnehmeranschlußleitung TL hin eine ebenfalls bidirektional arbeitende Paketier-/Depaketiereinrichtung PAD nachgeschaltet. In dieser Paketier-/Depaketiereinrichtung PAD werden die von den Umsetzern SPR und SIG gelieferten Datensignale zu Datensignalpaketen zusammengestellt, die dann über die Teilnehmeranschlußleitung TL an die Vermittlungsstelle VST abgegeben werden. Die Paketier-/Depaketiereinrichtung PAD arbeitet damit im Paketierbetrieb. Die Paketier-/Depaketiereinrichtung PAD arbeitet in der umgekehrten Übertragungsrichtung, also für über die Teilnehmeranschlußleitung TL ihr zugeführte Datensignalpakete indessen im Depaketierbetrieb, um die in ihr zugeführten Datensignalpaketen enthaltenen unterschiedlichen Datensignale zu den beiden Umsetzern SPR und SIG hinzuleiten, in denen daraus wieder Nachrichtensignale bzw. Signalisierungszeichen gebildet werden, welche über die Weichenschaltung W an den Multiplexer/Demultiplexer CH und über diesen an die jeweiligen in Frage kommenden Kommunikationsendgeräte der Teilnehmerstelle TST abgebbar sind.

Zu der in der Zeichnung dargestellten Schaltungsanordnung, über die die Teilnehmerstelle TST an ihrer Teilnehmeranschlußleitung TL angeschlossen ist, gehört noch eine Signalisierungs-Steuerschaltung SC, die eingangsseitig mit dem Multiplexer/Demultiplexer CH verbunden ist und die von diesem Verbindungsaufbauinformationen für den Aufbau von Verbindungen über die betrachtete Vermittlungsstelle VST zu dem genannten Datennetz NET zugeführt erhält. Ausgangsseitig ist die betreffende Signalisierungs-Steuerschaltung SC funktionsmäßig mit einem Steuereingang der Vermittlungsstelle VST verbunden, über die somit die jeweilige Verbindung zu dem Datennetz NET hin aufgebaut wird. Es sei hier noch angemerkt, daß die erwähnten Verbindungsaufbauinformationen bei der praktischen Ausführung der vorliegenden Erfindung selbstverständlich über die Teilnehmeranschlußleitung TL als der einzigen Leitung übertragen werden, mit der die Teilnehmerstelle TST an der Vermittlungsstelle VST angeschlossen ist.

Mit der Vermittlungsstelle VST des einen Kommunikationsnetzes ist das bereits mehrfach erwähnte weitere Kommunikationsnetz NET, bei dem es sich insbesondere um das Internet handelt, über eine Verbindungsleitung T1 und die Übergangseinrichtung GW verbunden, die von der Seite der Vermittlungsstelle VST aus betrachtet als Demultiplexer und von der Seite des weiteren Kommunikationsnetzes NET aus betrachtet als Multiplexer wirkt. Dabei ist in der Zeichnung in der betreffenden Übergangseinrichtung GW ein solcher Demultiplexer/Multiplexer DM dargestellt. Die betreffende Übergangseinrichtung stellt somit mit diesem Demultiplexer/Multiplexer DM hier eine Umsetzeinrichtung dar.

Die vorstehend betrachtete Übergangseinrichtung bzw. Umsetzeinrichtung GW ist mit der Vermittlungsstelle VST ferner über eine Mehrzahl von Einzelverbindungsleitungen T2 verbunden, was in der Zeichnung durch eine einzige, von einem kurzen Querstrich gekreuzte Verbindungslinie veranschaulicht ist. Diese in einer Mehrzahl vorgesehenen Einzelverbindungsleitungen T2 sind auf der Seite der Übergangs- bzw. Umsetzeinrichtung GW an einer bidirektional betreibbaren Übertragungseinrichtung TD angeschlossen, die eingangs- und ausgangsseitig mit dem Demultiplexer/Multiplexer DM der Übergangs- bzw. Umsetzeinrichtung GW verbunden ist.

In der Zeichnung sind noch mehrere, mit der Vermittlungsstelle VST verbundene Teilnehmerstellen angedeutet, die jeweils ein Kommunikationsendgerät aufweisen mögen, wie ein Fernsprechendgerät TEL3, ein Faxendgerät FAX2 bzw. einen Personalcomputer bzw. PC2.

Nachdem zuvor der Aufbau der in der Zeichnung dargestellten Schaltungsanordnung in dem für das Verständnis der Erfindung erforderlichen Umfange erläutert worden ist, werden nunmehr die Arbeitsweise dieser Schaltungsanordnung und das dabei angewandte Verfahren gemäß der Erfindung näher betrachtet.

Wenn von wenigstens einem der zu der Teilnehmerstelle TST gehörenden Kommunikationsendgeräte TEL1, TEL2, FAX1 und PC1 eine Kommunikationsverbindung zu einer anderen Teilnehmerstelle hin aufzubauen ist, die an derselben Vermittlungsstelle VST angeschlossen ist, an der auch die Teilnehmerstelle TST angeschlossen ist, oder die an demselben Kommunikationsnetz angeschlossen ist, zu dem die Vermittlungsstelle VST gehört, dann wird zunächst in der Teilnehmeranschlußschaltung TAS eine Multiplexverbindung mit im vorliegenden Fall vier Multiplexkanälen über die Teilnehmeranschlußleitung TL und die Vermittlungsstelle VST zu der Übergangs- bzw. Umsetzeinrichtung GW des weiteren Kommunikationsnetzes NET hin aufgebaut. Dabei kann die auf der Teilnehmeranschlußleitung TL zur Verfügung stehende Übertragungskapazität dem jeweiligen Übertragungskapazitätsbedarf entsprechend oder auf der Grundlage von festgelegten Übertragungskapazitätswerten den einzelnen Multiplexkanälen zugeteilt sein. Dies heißt, daß im Grunde beliebige Raster für die Multiplexkanäle auf der Grundlage der Übertragungskapazitäten möglich sind.

Im Zuge der zuvor erwähnten Multiplexverbindung wird dann nur ein Multiplexkanal genutzt, wenn nur eines der erwähnten Kommunikationsendgeräte eine Verbindung aufzubauen wünscht. Indessen stehen allerdings bei diesem Beispiel vier Multiplexkanäle zur Verfügung, so daß im Grunde alle vier Kommunikationsendgeräte der Teilnehmerstelle TST gleichzeitig Verbindungen zu gewünschten Teilnehmerstellen aufbauen können.

Die erwähnte Multiplexverbindung verläuft zum einen über die Teilnehmeranschlußleitung TL zu der Vermittlungsstelle VST, der die betreffende Teilnehmerstelle TST zugehörig ist. Von dieser Vermittlungsstelle VST aus wird die betreffende Multiplexverbindung über die Verbindungsleitung T1 zu der Übergangs- bzw. Umsetzeinrichtung GW weitergeleitet, in der bzw. genauer gesagt in deren Demultiplexer/Multiplexer DM die betreffende Multiplexverbindung bzw. die im Zuge dieses Multiplexbetriebs übertragenen Nachrichtensignale für verschiedene Verbindungen in Einzelverbindungen aufgelöst werden, die dann über die Übertragungseinrichtung TD und die in einer Mehrzahl vorgesehenen weiteren Einzelverbindungsleitungen T2 zu der Vermittlungsstelle VST zurückgeleitet werden. Von dieser Vermittlungsstelle VST werden im vorliegenden Fall die im Zuge von Einzelverbindungen übertragenen Nachrichtensignale zu den gewünschten anzurufenden Teilnehmerstellen bzw. zu deren Kommunikationsendgeräten TEL3, FAX2 bzw. PC2 hin weitergeleitet. An dieser Stelle sei angemerkt, daß die betreffenden Teilnehmerstellen nun nicht nur an derselben Vermittlungsstelle VST angeschlossen zu sein brauchen, an der die Teilnehmerstelle TST angeschlossen ist, um Nachrichtensignale von den Kommunikationsendgeräten der Teilnehmerstelle TST her zu erhalten. Vielmehr können die zuletzt betrachteten Teilnehmerstellen TEL3, FAX2, PC2 auch an irgendeiner anderen Vermittlungsstelle des Kommunikationsnetzes angeschlossen sein, zu dem die Vermittlungsstelle VST gehört.

In anderer Richtung, d.h. für Kommunikationsverbindungen von den genannten weiteren Teilnehmerstellen bzw. von deren Kommunikationsendgeräten TEL3, FAX2, PC2 zu den einzelnen Telekommunikationsendgeräten TEL1, TEL2, FAX1, PC1 der Teilnehmerstelle TST hin werden zunächst von den betreffenden Teilnehmerstellen bzw. von deren Kommunikationsendgeräten TEL3, FAX2, PC2 aus Einzelverbindungen über die Vermittlungsstelle VST und die in einer Mehrzahl vorgesehenen Einzelverbindungsleitungen T2 zu der Übergangs- bzw. Umsetzeinrichtung GW hin aufgebaut. Von dem Demultiplexer/Multiplexer DM der betreffenden Übergangs- bzw. Umsetzeinrichtung GW werden diese Einzelverbindungen dann als Multiplexverbindung über die Verbindungsleitung T1 wieder zur Vermittlungsstelle VST geführt, von der diese Multiplexverbindung über die Teilnehmeranschlußleitung TL der Teilnehmerstelle TST geleitet wird. Im Zuge dieser Verbindungen gelangen Nachrichtensignale zunächst über die in einer Mehrzahl vorgesehenen Einzelverbindungsleitungen T2 zu der Übertragungseinrichtung TD der Übergangs- bzw. Umsetzeinrichtung GW hin, von der sie im Zuge einer Multiplexverbindung vom zugehörigen Demultiplexer/Multiplexer DM über die Verbindungsleitung T1 zur Vermittlungsstelle VST und über diese zu der Teilnehmeranschlußleitung TL geleitet werden. Diese Multiplexverbindung umfaßt beispielsweise ebenfalls wieder vier Multiplexkanäle, so daß gleichzeitig vier Kommunikationsverbindungen in dem die Vermittlungsstelle VST enthaltenden Kommunikationsnetz zu den vier Kommunikationsendgeräten TEL1, TEL2, FAX1, PC1 der Teilnehmerstelle TST aufgebaut werden können. Ist nur eine Kommunikationsverbindung herzustellen, so wird gleichwohl eine solche Multiplexverbindung hergestellt, bei der dann allerdings nur ein Multiplexkanal für die Signalübertragung genutzt ist.

Aus der vorstehenden Erläuterung der gleichzeitigen Herstellung einer Mehrzahl von Kommunikationsverbindungen zwischen den Kommunikationsendgeräten der Teilnehmerstelle TST und weiteren Teilnehmerstellen, die demselben Kommunikationsnetz zugehörig sind, dem auch die genannte Teilnehmerstelle TST zugehörig ist, dürfte ersichtlich sein, daß von dem genannten weiteren Kommunikationsnetz NET lediglich die Demultiplexer/Multiplexerfunktion in dessen Übergangs- bzw. Umsetzeinrichtung GW genutzt wird; das betreffende weitere Kommunikationsnetz NET spielt ansonsten hier für die Herstellung der betrachteten Verbindungen keine Rolle.

Vorstehend sind die Verbindungen zwischen der Teilnehmerstelle TST und dem genannten weiteren Kommunikationsnetz bzw. Datennetz NET jeweils als Multiplexverbindungen bezeichnet worden. Bei der jeweiligen Multiplexverbindung kann es sich dabei vorzugsweise um eine Zeitmultiplexverbindung handeln, bei der Signale zeitlich nacheinander in einzelnen Zeitschlitzen von Zeitkanälen übertragen werden, deren Anzahl beispielsweise gleich der Anzahl der Kommunikationsendgeräte der Teilnehmerstelle TST ist.

Im Falle einer digital betriebenen Teilnehmeranschlußleitung TL mit wenigstens einem von der Teilnehmerstelle TST nutzbaren Kommunikationskanal kann dieser im Zuge der Zeitmultiplexverbindung in mehrere Unterkanäle aufgeteilt sein, in denen zu übertragende Sprachsignale komprimiert übertragen werden können.

## Patentansprüche

1. Verfahren zur gleichzeitigen Herstellung einer Mehrzahl von Kommunikationsverbindungen zwischen einer über eine einzige Teilnehmeranschlußleitung an einer Vermittlungsstelle eines Kommunikationsnetzes angeschlossenen Teilnehmerstelle und weiteren an demselben Kommunikationsnetz angeschlossenen Teilnehmerstellen bei dem
die genannte Teilnehmeranschlußleitung (TL) zwischen ihrer Teilnehmerstelle (TST) und der zugehörigen Vermittlungsstelle (VST) des betreffenden einen Kommunikationsnetzes als Multiplex-Anschlußleitung betrieben wird, über die eine Mehrzahl von Kommunikationsverbindungen mit einer entsprechenden Anzahl von zu der Teilnehmerstelle (TST) gehörenden Kommunikationsendgeräten (TEL1, TEL2, FAX1, PC1) aufbaubar ist, bei dem zwischen der betreffenden Vermittlungsstelle (VST) und einer Umsetzeinrichtung (GW) zumindest eine Verbindungsleitung (T1) als Multiplex-Verbindungsleitung betrieben wird und bei dem in der genannten Umsetzeinrichtung (GW) zum einen von der genannten einen Teilnehmerstelle (TST) über die betreffende eine Vermittlungsstelle (VST) im Multiplexbetrieb übertragene Nachrichtensignale für verschiedene Kommunikationsverbindungen im Zuge von Einzelverbindungen zu der genannten Vermittlungsstelle (VST) wieder zurückgeleitet werden, von der Einzelverbindungen zu gewünschten anzurufenden Teilnehmerstellen (TEL3, FAX2, PC2) hin aufbaubar sind, und zum anderen im Zuge von Einzelverbindungen für die Kommunikationsendgeräte (TEL1 bzw. TEL2, FAX1, PC1) der genannten einen Teilnehmerstelle (TST) bestimmte Nachrichtensignale aufgenommen und dann im Zuge einer Multiplexverbindung wieder über die betreffende Vermittlungsstelle (VST) zu den einzelnen Kommunikationsendgeräten (TEL1 bzw. TEL2, FAX1, PC1) der genannten einen Teilnehmerstelle (TST) hin geleitet werden.

2. Verfahren nach Anspruch 1, **dadurch gekennzeichnet, daß** die jeweilige Multiplexverbindung als Zeitmultiplexverbindung betrieben wird.

3. Verfahren nach Anspruch 2, **dadurch gekennzeichnet, daß** bei Nutzung einer digital betriebenen Teilnehmeranschlußleitung (TL) mit wenigstens einem von der betreffenden Teilnehmerstelle (TST) nutzbaren Sprachsignalkanal dieser im Zuge der Zeitmultiplexverbindung in mehrere Unterkanäle aufgeteilt wird.

4. Verfahren nach Anspruch 3, **dadurch gekennzeichnet, daß** die in den einzelnen Unterkanälen zu übertragenden Sprachsignale komprimiert übertragen werden.

5. Verfahren nach einem der Ansprüche 1 bis 4, **dadurch gekennzeichnet, daß** bei Einsatz einer Umsetzeinrichtung (GW) in einer Übergangseinrichtung (GW) zu einem weiteren Kommunikationsnetz (NET), insbesondere einem Datennetz, vorzugsweise dem Internet, Nachrichtensignale und Signalisierungszeichen von/zu den einzelnen Kommunikationsendgeräten (TEL1, TEL2, FAX1, PC1) in Form von Datensignalpaketen in dem genannten weiteren Kommunikationsnetz (NET) übertragen werden.

6. Schaltungsanordnung zur Durchführung des Verfahrens nach einem der Ansprüche 1 bis 5, mit wenigstens einer eine Mehrzahl von Kommunikationsendgeräten (TEL1, TEL2, FAX1, PC1) aufweisenden Teilnehmerstelle (TST), die über eine einzige Teilnehmeranschlußleitung (TL) an einer Vermittlungsstelle (VST), insbesondere einer digitalen Vermittlungsstelle eines Kommunikationsnetzes angeschlossen ist,
**dadurch gekennzeichnet, daß** die an der genannten einen Teilnehmerstelle (TST) in einer Mehrzahl vorgesehenen Kommunikationsendgeräte (TEL1, TEL2, FAX1, PC1) über einen Multiplexer/Demultiplexer (CH) am teilnehmerseitigen Ende der Teilnehmeranschlußleitung (TL) der betreffenden Teilnehmerstelle (TST) angeschlossen sind,
daß an der genannten Vermittlungsstelle (VST) über mindestens eine Verbindungsleitung (T1) eine Umsetzeinrichtung (GW) mit einem Demultiplexer/Multiplexer (DM) angeschlossen ist, zwischen dem und dem genannten Multiplexer/Demultiplexer (CH) Multiplexverbindungen über die genannte Teilnehmeranschlußleitung (TL) von bzw. zu den Kommunikationsendgeräten (TEL1, TEL2, FAX1, PC1) der genannten einen Teilnehmerstelle (TST) aufbaubar sind,
und daß die betreffende Umsetzeinrichtung (GW) mit der genannten Vermittlungsstelle (VST) außerdem über eine Mehrzahl von Einzelverbindungsleitungen (T2) verbunden ist, über die zum einen über die genannte Verbindungsleitung (T1) im Zuge einer Multiplexverbindung zugeführte Nachrichtensignale zu der Vermittlungsstelle (VST) zurückleitbar sind, in der bzw. über die diese Nachrichtensignale an in Frage kommende anzurufende Teilnehmerstellen (TEL3, FAX2, PC2) weiterleitbar sind, und über die zum anderen im Zuge von Einzelverbindungen für die Kommunikationsendgeräte (TEL1, TEL2, FAX1, PC1) der genannten einen Teilnehmerstelle (TST) bestimmte Nachrichtensignale aufnehmbar sind, durch deren Demultiplexer/Multiplexer (DM) diese Nachrichtensignale im Rahmen einer Multiplexverbindung über die genannte Verbindungsleitung (T1) zu der betreffenden Vermittlungsstelle (VST) und über diese zu der die betreffenden Kommunikationsendgeräte (TEL1, TEL2, FAX1, PC1) enthaltenden Teilnehmerstelle (TST) hin übertragbar sind.

7. Schaltungsanordnung nach Anspruch 6, **dadurch gekennzeichnet, daß** die Umsetzeinrichtung (GW) in einer Übergangseinrichtung (GW) zu einem weiteren Kommunikationsnetz (NET), insbesondere dem Internet, enthalten ist, wobei zwischen der betreffenden Ubergangseinrichtung (GW) und der genannten Teilnehmerstelle (TST) Kommunikationsverbindungen aufbaubar sind, die zu bzw. von an dem genannten weiteren Kommunikationsnetz (NET), an der genannten einen Vermittlungsstelle oder an einer weiteren Vermittlungsstelle des genannten einen Kommunikationsnetzes angeschlossenen weiteren Teilnehmerstellen weiterführbar bzw. aufbaubar sind.

8. Schaltungsanordnung nach Anspruch 7, **dadurch gekennzeichnet, daß** in dem Fall, daß das genannte weitere Kommunikationsnetz durch ein Datennetz (NET), insbesondere durch das Internet gebildet ist, zwischen dem Multiplexer/Demultiplexer (CH) und der Teilnehmeranschlußleitung (TL) der genannten einen Teilnehmerstelle eine Umsetzschaltung (W, SPR, SIG, PAD) vorgesehen ist, in der von den betreffenden Kommunikationsendgeräten (TEL1, TEL2, FAX1, PC1) der Teilnehmerstelle (TST) abgegebene Nachrichtensignale und Signalisierungszeichen zu Datensignalpaketen umgesetzt werden, die in dem genannten weiteren Kommunikationsnetz (NET) verarbeitbar sind, und in der von dem betreffenden weiteren Kommunikationsnetz (NET) her zugeführte Datensignalpakete in Nachrichtensignale und Signalisierungszeichen für die Abgabe an die in Frage kommenden Kommunikationsendgeräte (TEL1, TEL2, FAX1, PC1) der genannten Teilnehmerstelle (TST) umgesetzt werden.

9. Schaltungsanordnung nach einem der Ansprüche 6 bis 8, **dadurch gekennzeichnet, daß** der Multiplexer/Demultiplexer (CH) mit der genannten Vermittlungseinrichtung (VST), an der die genannte eine Teilnehmerstelle (TST) angeschlossen ist, über eine gesonderte Signalisierungs-Steuerschaltung (SC) verbunden ist, über die der jeweilige Verbindungsaufbau von der betreffenden Teilnehmerstelle (TST) über die genannte Vermittlungseinrichtung (VST) zu der damit verbundenen Umsetzeinrichtung (GW) steuerbar ist.

## Claims

1. Method for the simultaneous establishment of a number of communication connections between a subscriber station by means of a single subscriber line to a communication network connected to a switching center and to other subscriber stations connected to the same communication network, whereby
the said subscriber connection line (TL) is operated between its subscriber station (TST) and the associated switching center (VST) of the relevant one communication network as a multiplex connection line, through which a number of communication connections can be established with a corresponding number of communication terminals (TEL1, TEL2, FAX1, PC1) belonging to the subscriber station (TST), whereby between the relevant switching center (VST) and a conversion unit (GW) at least one connecting line (T1) is operated as a multiplex connecting line and whereby in the said conversion unit (GW), on the one hand, communication signals transmitted from the said one subscriber station (TST) via the relevant one switching center (VST) in multiplex operation for various communication connections are returned in the course of single connections to the said switching center (VST), from which individual connections to subscriber stations (TEL3, FAX2, PC2) can then be established, and on the other hand, in the course of single connections communication signals intended for the communication terminals (TEL1 or TEL2, FAX1, PC1) of the said one subscriber station (TST) are received and then in the course of a multiplexing connection are again sent via the relevant switching center (VST) to the individual communication terminals (TEL1 or TEL2, FAX1, PC1) of the said one subscriber station (TST).

2. Method in accordance with claim 1, **characterized in that** the particular multiplex connection is operated as a time-division multiplex connection.

3. Method in accordance with claim 2, **characterized in that** where a digitally operated subscriber line (TL) is utilized with at least one voice signal channel that can be used by the relevant subscriber station (TST), this is divided into several subchannels in the course of the time-division multiplex connection.

4. Method in accordance with claim 3, **characterized in that** the voice signals to be transmitted in the individual subchannels are transmitted compressed.

5. Method in accordance with one of claims 1 to 4, **characterized in that** where a conversion unit (GW) is used in a transition device (GW) to another communication network (NET), particularly to a data network, preferably to the Internet, communication signals and signaling characters from/to the individual communication terminals (TEL1, TEL2, FAX1, PC1) are transmitted in the form of data signal packets in the said other communication network (NET).

6. Circuit arrangement for performance of the method in accordance with claims 1 to 5, with at least one subscriber station (TST) containing a number of communication terminals (TEL1, TEL2, FAX1, PC1), that are connected via a single subscriber line (TL) to a switching center (VST), particularly to a digital switching center of a communication network,
**characterized in that** a number of provided communication terminals (TEL1, TEL2, FAX1, PC1) are connected to the said one subscriber station (TST) via a multiplexer/demultiplexer (CH) at the subscriber end of the subscriber line (TL) of the relevant subscriber station (TST),
that a conversion unit (GW) with a demultiplexer/multiplexer (DM) is connected to the said switching center (VST) via at least one connecting line (T1), and that between it and the said multiplexer/demultiplexer (CH) multiplex connections can be established via the said subscriber line (TL) from or to the communication terminals (TEL1, TEL2, FAX1, PC1) of the said one subscriber station (TST),
and that the relevant conversion unit (GW) is furthermore connected with the said switching center (VST) via a number of single lines (T2), through which, on the one hand, communication signals applied via the said connecting line (T1) in the course of a multiplex connection can be returned to the switching center (VST), in which, or through which, these communication signals can be forwarded to the relevant subscriber station (TEL3, FAX2, PC2) to be called, and through which, on the other hand, communication signals intended for the communication terminals (TEL1, TEL2, FAX1, PC1) of the said one subscriber station (TST) can be received in the course of single connections, by means of whose demultiplexer/multiplexer (DM) these communication signals can be transmitted as part of a multiplex connection via the said connecting line (T1) to the relevant switching center (VST) and through this to the subscriber station (TST) containing the relevant communication terminals (TEL1, TEL2, FAX1, PC1).

7. Circuit arrangement in accordance with claim 6, **characterized in that** the conversion unit (GW) is contained in a transition unit (GW) to a further communication network (NET), particularly to the Internet, with it being possible to establish communication connections between the relevant transition device (GW) and the said subscriber station (TST) that can be passed on to, or established to or from, the said other communication network (NET), the said one switching center or to another switching center of the said other subscriber stations connected to a communication network.

8. Circuit arrangement in accordance with claim 7, **characterized in that** where the said other communication network is formed by a data network (NET), particularly by the Internet, a conversion circuit (W, SPR, SIG, PAD) is provided between the multiplexer/demultiplexer (CH) and the subscriber line (TL) of the said one subscriber station, in which the communication signals and signaling characters sent from the relevant communication terminals (TEL1, TEL2, FAX1, PC1) of the subscriber station (TST) are converted to data signal packets that can be processed in the said other communication network (NET) and in which data signal packets transmitted from the relevant other communication network (NET) are converted into communication signals and signaling characters for output to the relevant communication terminals (TEL1, TEL2, FAX1, PC1) of the said subscriber station (TST).

9. Circuit arrangement in accordance with one of claims 6 to 8,
**characterized in that** the multiplexer/demultiplexer (CH) is connected to the said switching center (VST) to which the said one subscriber station (TST) is connected, via a separate signaling-control circuit (SC), by means of which the particular establishment of a connection from the relevant subscriber station (TST) via the said switching center (VST) to the conversion unit (GW) connected thereto can be controlled.

## Revendications

1. Procédé pour établir simultanément une multiplicité de liaisons de communication entre un poste d'abonné raccordé via une seule ligne de raccordement d'abonné à un central de commutation d'un réseau de communication et d'autres postes d'abonnés raccordés au même réseau de communication, dans lequel ladite ligne de raccordement d'abonné (TL) entre son poste d'abonné (TST) et le central de commutation associé (VST) du réseau de communication considéré est exploitée comme une ligne de raccordement en multiplex par l'intermédiaire de laquelle on peut établir une multiplicité de liaisons de communication avec un nombre correspondant de terminaux de communication (TEL1, TEL2, FAX1, PC1) appartenant au poste d'abonné (TST), dans lequel on exploite entre le central de commutation (VST) considéré et un dispositif de conversion (GW) au moins une ligne de liaison (T1) comme ligne de liaison en multiplex et dans lequel, dans ledit dispositif de conversion (GW), d'une part des signaux d'informations transmis en multiplex par ledit poste d'abonné (TST) via le central de commutation considéré (VST) et destinés à différentes liaisons de communication sont renvoyés au cours de liaisons individuelles au central de commutation considéré (VST) à partir duquel des liaisons individuelles vers des postes d'abonnés (TEL3, FAX2, PC2) à appeler souhaités peuvent être établies et d'autre part des signaux d'informations destinés au cours de liaisons individuelles aux terminaux de communication (TEL1 ou TEL2, FAX1, PC1) dudit poste d'abonné (TST) sont reçus puis sont envoyés au cours d'une liaison multiplex via le central de commutation considéré (VST) aux terminaux de communication individuels (TEL1 ou TEL2, FAX1, PC1) dudit poste d'abonné (TST).

2. Procédé selon la revendication 1, **caractérisé par le fait qu'**on exploite la liaison multiplex respective comme une liaison à multiplexage temporel.

3. Procédé selon la revendication 2, **caractérisé par le fait que**, lors de l'utilisation d'une ligne de raccordement d'abonné (TL) numérique avec au moins un canal de signal vocal utilisable par le poste d'abonné considéré (TST), on divise ce canal au cours de la liaison en multiplexage temporel en plusieurs sous-canaux.

4. Procédé selon la revendication 3, **caractérisé par le fait qu'**on transmet sous forme comprimée les signaux vocaux à transmettre dans les différents sous-canaux.

5. Procédé selon l'une des revendications 1 à 4, **caractérisé par le fait que**, lors de l'utilisation d'un dispositif de conversion (GW) dans un dispositif de transition (GW) vers un autre réseau de communication (NET), notamment vers un réseau de données, de préférence vers Internet, on transmet des signaux d'informations et des caractères de signalisation de / vers les différents terminaux de communication (TEL1, TEL2, FAX1, PC1) sous la forme de paquets de signaux de données dans l'autre réseau de communication (NET).

6. Circuit pour la mise en oeuvre du procédé selon l'une des revendications 1 à 5, avec au moins un poste d'abonné (TST) qui comporte une multiplicité de terminaux de communication (TEL1, TEL2, FAX1, PC1) et qui est raccordé via une seule ligne de raccordement d'abonné (TL) à un central de commutation (VST), notamment à un central de commutation numérique d'un réseau de communication, **caractérisé par le fait que**
les terminaux de communication (TEL1, TEL2, FAX1, PC1) prévus sur ledit poste d'abonné (TST) sont raccordés par l'intermédiaire d'un multiplexeur / démultiplexeur (CH) à l'extrémité côté abonné de la ligne de raccordement d'abonné (TL) du poste d'abonné considéré (TST),
il est raccordé audit central de commutation (VST) par l'intermédiaire d'au moins une ligne de liaison (T1) un dispositif de conversion (GW) avec un démultiplexeur / multiplexeur (DM) entre lequel et ledit multiplexeur / démultiplexeur (CH) des liaisons multiplex peuvent être établies par l'intermédiaire de ladite ligne de raccordement d'abonné (TL) de ou vers les terminaux de communication (TEL1, TEL2, FAX1, PC1) dudit poste d'abonné (TST),
et le dispositif de conversion considéré (GW) est relié audit central de commutation (VST) en outre par l'intermédiaire d'une multiplicité de lignes de liaison individuelles (T2) par l'intermédiaire desquelles d'une part des signaux d'informations envoyés via ladite ligne de liaison (T1) au cours d'une liaison multiplex peuvent être renvoyés au central de commutation (VST) dans lequel ou via lequel ces signaux d'informations peuvent être retransmis à des postes d'abonnés (TEL3, FAX2, PC2) à appeler envisagés et par l'intermédiaire desquelles d'autre part des signaux d'informations destinés aux terminaux de communication (TEL1, TEL2, FAX1, PC1) dudit poste d'abonné (TST) au cours de liaisons individuelles peuvent être reçus et ces signaux d'informations peuvent être transmis au moyen du démultiplexeur / multiplexeur (DM) dans le cadre d'une liaison multiplex via ladite ligne de liaison (T1) au central de commutation considéré (VST) et via celui-ci au poste d'abonné (TST) contenant les terminaux de communication considérés (TEL1, TEL2, FAX1, PC1).

7. Circuit selon la revendication 6, **caractérisé par le fait que** le dispositif de conversion (GW) est contenu dans un dispositif de transition (GW) vers un autre réseau de communication (NET), notamment vers Internet, qu'il peut être établi entre le dispositif de transition considéré (GW) et ledit poste d'abonné (TST) des liaisons de communication qui peuvent être connectées ou établies de ou vers d'autres postes d'abonnés raccordés à l'autre réseau de communication (NET), audit central de commutation ou à un autre central de commutation dudit réseau de communication.

8. Circuit selon la revendication 7, **caractérisé par le fait que**, si l'autre réseau de communication est formé par un réseau de données (NET), notamment par Internet, il est prévu entre le multiplexeur / démultiplexeur (CH) et la ligne de raccordement d'abonné (TL) dudit poste d'abonné un circuit de conversion (W, SPR, SIG, PAD) dans lequel des signaux d'informations et caractères de signalisation délivrés par les terminaux de communication considérés (TEL1, TEL2, FAX1, PC1) du poste d'abonné (TST) sont convertis en paquets de signaux de données qui peuvent être traités dans l'autre réseau de communication (NET) et dans lequel des paquets de signaux de données envoyés par l'autre réseau de communication considéré (NET) sont convertis en signaux d'informations et caractères de signalisation pour être délivrés aux terminaux de communication envisagés (TEL1, TEL2, FAX1, PC1) dudit poste d'abonné (TST).

9. Circuit selon l'une des revendications 6 à 8, **caractérisé par le fait que** le multiplexeur / démultiplexeur (CH) est relié audit central de commutation (VST), auquel ledit poste d'abonné (TST) est raccordé, par l'intermédiaire d'un circuit de commande de signalisation (SC) particulier par l'intermédiaire duquel peut être commandé l'établissement de liaison respectif du poste d'abonné considéré (TST) via le central de commutation considéré (VST) au dispositif de conversion (GW) relié à celui-ci.
